# EUROPEAN PATENT SPECIFICATION

(11) **EP 3 873 031 B1**
(45) Date of publication and mention of the grant of the patent: **19.03.2025**
(21) Application number: 20160137.4
(22) Date of filing: 28.02.2020
(51) Int. Cl.: H04L 41/044, H04L 41/14, H04L 41/342, H04L 41/40

(54) **COMMUNICATION SYSTEM COMPONENT AND METHOD FOR COLLECTING DATA IN A COMMUNICATION SYSTEM**
KOMMUNIKATIONSSYSTEMKOMPONENTE UND VERFAHREN ZUM SAMMELN VON DATEN IN EINEM KOMMUNIKATIONSSYSTEM
COMPOSANT DE SYSTÈME DE COMMUNICATION ET PROCÉDÉ DE COLLECTE DE DONNÉES DANS UN SYSTÈME DE COMMUNICATION

(43) Date of publication of application: 01.09.2021
(73) Proprietor: NTT DOCOMO, INC., Chiyoda-ku Tokyo 100-6150 (JP)
(72) Inventor: SAMA, Malla Reddy, 80687 Munich (DE); THAKOLSRI, Srisakul, 80687 Munich (DE); MINOKUCHI, Atsushi, Tokyo, 100-6150 (JP); AOYAGI, Kenichiro, Tokyo, 100-6150 (JP); GUERZONI, Riccardo, 80687 Munich (DE)
(74) Representative: Viering, Jentschura & Partner mbB Patent- und Rechtsanwälte

(56) References cited:
- CATT: "Solution for KI#2: Mitigating the load for Data Collection", vol. SA WG2, no. Incheon, Korea; 20200113 - 20200117, 7 January 2020 (2020-01-07), XP051842823, Retrieved from the Internet <URL:https://ftp.3gpp.org/tsg_sa/WG2_Arch/TSGS2_136AH_Incheon/Docs/S2-2000768.zip S2-2000768_Solution for KI#2 Mitigating the load for Data Collection.docx> [retrieved on 20200107]
- HUAWEI ET AL: "Data Collection Coordination for Multiple NWDAF Instances", vol. SA WG2, no. Incheon, South Korea; 20200113 - 20200117, 7 January 2020 (2020-01-07), XP051842493, Retrieved from the Internet <URL:https://ftp.3gpp.org/tsg_sa/WG2_Arch/TSGS2_136AH_Incheon/Docs/S2-2000423.zip S2-2000423 - pCR TR 23700-91 Data Collection Coordination for Multiple NWDAF Instances.doc> [retrieved on 20200107]
- "3rd Generation Partnership Project; Technical Specification Group Services and System Aspects; Architecture enhancements for 5G System (5GS) to support network data analytics services (Release 16)", vol. SA WG2, no. V16.2.0, 22 December 2019 (2019-12-22), pages 1 - 57, XP051840923, Retrieved from the Internet <URL:ftp://ftp.3gpp.org/Specs/archive/23_series/23.288/23288-g20.zip 23288-g20.docx> [retrieved on 20191222]
- "3rd Generation Partnership Project; Technical Specification Group Services and System Aspects; Study on enablers for network automation for the 5G System (5GS); Phase 2 (Release 17)", 3 February 2020 (2020-02-03), XP051846021, Retrieved from the Internet <URL:https://ftp.3gpp.org/tsg_sa/WG2_Arch/Latest_SA2_Specs/Latest_draft_S2_Specs/23700-91-030.zip 23700-91-030_MCCclean.doc> [retrieved on 20200203]

## Description

The present disclosure relates to communication system components and methods for collecting data in a communication system.

In a communication system, various components need information to perform their tasks. An example is a component performing network analytics, e.g. analysis of the load of the communication system or parts of the communication system which may need information from components such as radio access network components about data traffic, number of sessions etc. Since collection of data generates signalling traffic in the communication system, efficient approaches for collecting data in a communication system, such as a cellular mobile communication system like a 5G communication system, are desirable.

CATT: "Solution for Kl#2: Mitigating the load for Data Collection", 3GPP DRAFT; S2-2000768, 3RD GENERATION PARTNERSHIP PROJECT (3GPP), MOBILE COMPETENCE CENTRE; 650, ROUTE DES F-06921 SOPHIA-ANTIPOLIS CEDEX; FRANCE, vol. SA WG2, no. Incheon, Korea; 20200113 - 20200117 7 January 2020 (2020-01-07) discloses processes to coordinate data collection in a mobile network.

HUAWEI ET AL: "Data Collection Coordination for Multiple NWDAF Instances", 3GPP DRAFT; S2-2000423, 3RD GENERATION PARTNERSHIP PROJECT (3GPP), MOBILE COMPETENCE CENTRE 650, ROUTE DES LUCIOLES ; F-06921 SOPHIA-ANTIPOLIS CEDEX; FRANCE, vol. SA WG2, no. Incheon, South Korea; 20200113 - 20200117 7 January 2020 (2020-01-07) discloses processes to mitigate the load in 5GC for data collection.

According to a first aspect of the present invention, a communication system component of a communication system is provided according to claim 1.

According to a second aspect of the present invention, a method for collecting data in a communication system according to claim 9 is provided.

According to a further aspect of the present invention a computer program and a computer readable medium according to claim 10 is provided.

Additional features for advantageous embodiments of the present invention are provided in the dependent claims.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system.
- Figure 2: illustrates an interface for an NWDAF (Network Data and Analytics Function) to acquire data from a network function.
- Figure 3: illustrates an interface for a network function to acquire data analytics information (i.e. analysis result information) from an NWDAF.
- Figure 4: illustrates an approach for data collection in a communication network.
- Figure 5: illustrates an approach for data collection in a communication network according to an embodiment.
- Figure 6: shows a message flow diagram illustrating a method for collecting data according to an embodiment.
- Figure 7: shows a communication system arrangement according to an embodiment.
- Figure 8: shows a flow diagram illustrating a procedure for data storage and data retrieval by a consumer component in/from a DCS (data collection system).
- Figure 9: shows a communication system component of a communication system according to an embodiment.
- Figure 10: shows a flow diagram illustrating a method for collecting data in a communication system according to an embodiment.

The following detailed description refers to the accompanying drawings that show, by way of illustration, specific details and aspects of this disclosure in which the invention may be practiced.

In the following, various examples will be described in more detail.

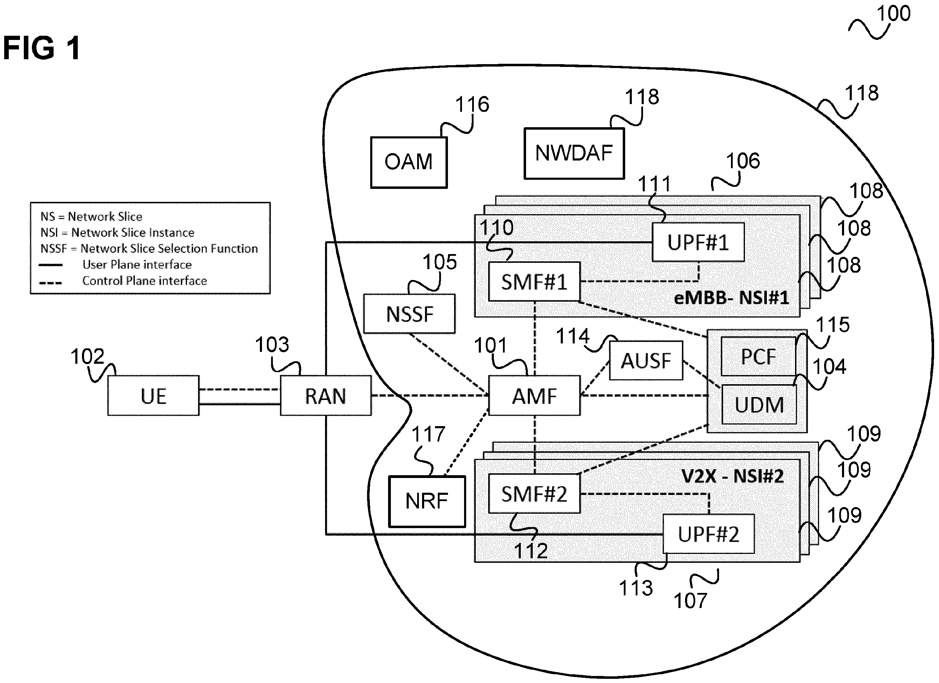

Figure 1 shows a radio communication system 100.

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile communication network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another radio communication standard (e.g. Wi-Fi) but 5G is herein used as an example. Each radio access network node may provide a radio communication with the mobile radio terminal device 102 over an air interface. It should be noted that the radio access network 103 may include any number of radio access network nodes.

The radio communication system 100 further includes a core network 118 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 118 further includes an AUSF (Authentication Server Function) 114 and a PCF (Policy Control Function) 115.

The core network 118 may have multiple network slices 106, 107 and for each network slice 106, 107, the operator may create multiple network slice instances (NSIs) 108, 109. For example, the core network 118 includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113.

The core network 118 may further include an NRF (Network Repository Function) 117, which provides network function/network function service registration, network function/network function service discovery. The NRF may have an interface to any network function in the mobile radio communication network side, e.g. have an interface to the AMF 101, the SMFs 110, 112. For simplicity, only the interface between the NRF 117 and the AMF 101 is depicted.

The radio communication system 100 may further include an OAM (Operation, Administration and Maintenance) function (or entity) 116, e.g. implemented by one or more OAM servers which is connected to the RAN 103 and the core network 118 (connections are not shown for simplicity).

Further, the radio communication system 100 may include a NWDAF (Network Data and Analytics Function) 118.

The NWDAF 118 is responsible for providing network analysis information upon request from network functions or communication system components (such as AMF, SMF etc.). For example, a network function may request specific analysis information on the load level of a particular network slice. Alternatively, the network function can use the subscribe service to ensure that it is notified by the NWDAF if the load level of a network slice changes or reaches a specific threshold.

To be able to provide analysis results, the 5G system architecture allows the NWDAF 118 to collect data from any NF. The NWDAF belongs to the same PLMN where the network function that notifies the data is located, i.e. the interactions between the NWDAF and the other NFs are currently only considered in the case of the same PLMN (i.e. roaming is currently not considered in 3GPP (3^{rd} generation partnership project of release-16 specification).

Any NF may request network analytics information from the NWDAF 118.

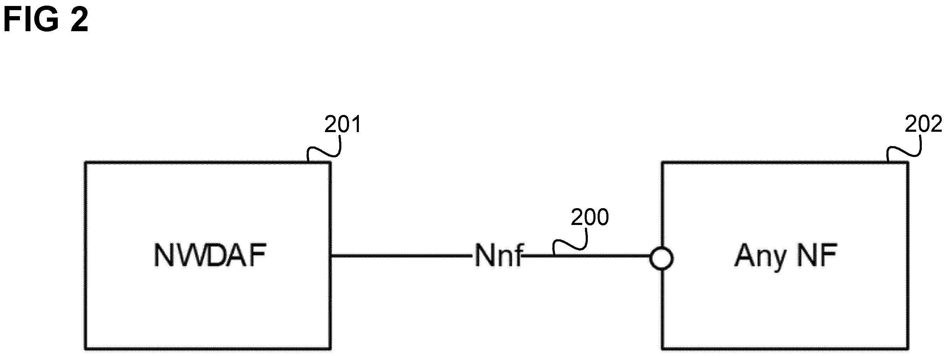

Figure 2 illustrates an interface 200 for an NWDAF 201 to acquire data from a network function 202.

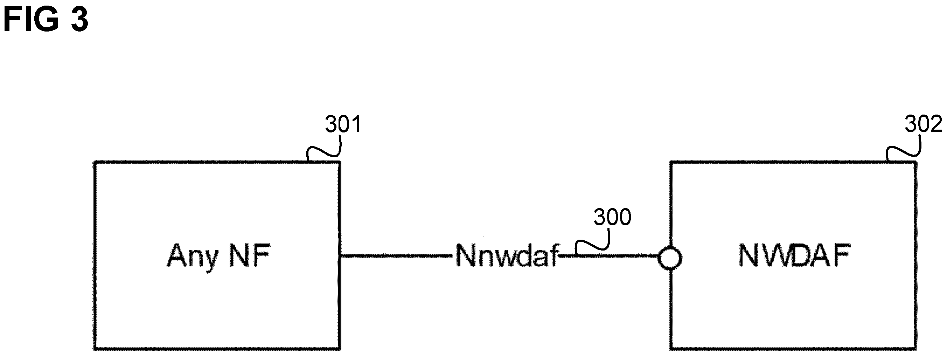

Figure 3 illustrates an interface 300 for a network function 301 to acquire data analytics information (i.e**.** analysis result information) from an NWDAF 302.

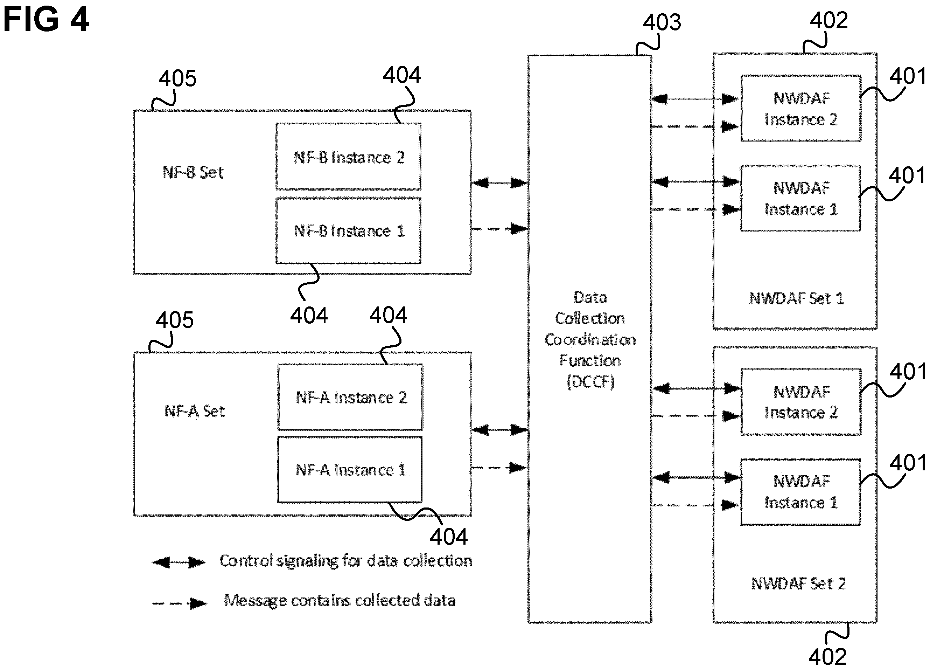

Figure 4 illustrates an approach for data collection in a communication network.

A plurality of NWDAF instances 401, grouped to NWDAF sets 402, get data from a data collection coordination function (DCCF) 403. If the DCCF 403 does not have data that one of the NWDAFs 401 requests it gets the data from a respective network function instance 404 (of network function groups 405). The DCCF 403 can thus be seen to work as a proxy for the NWDAFs 401.

In the following, alternatives to the approach of figure 4 are described that do not require a DCCF including logic to acquire data from data sources (such as data producing components like network functions or RAN components).

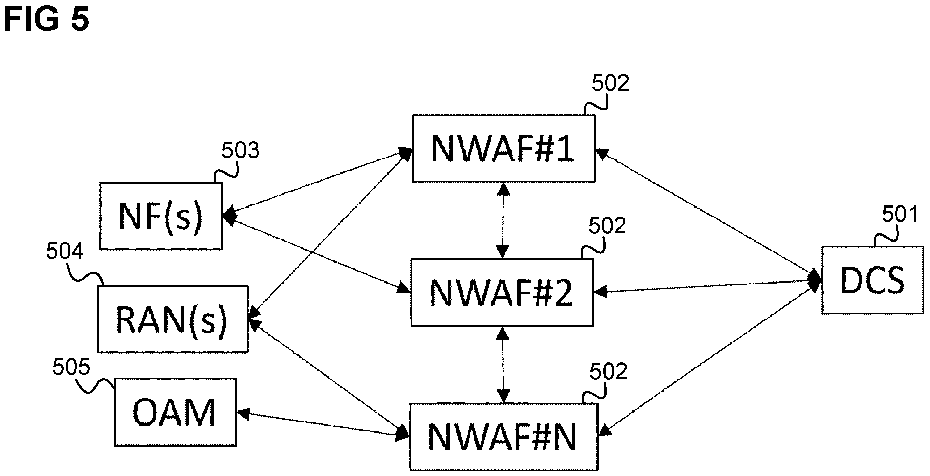

Figure 5 illustrates an approach for data collection in a communication network according to an embodiment.

The communication network includes a DCS 501 (Data Collection Function/Service) which stores all NWAF collected data, i.e. data collected by NWAFs (Network Analytics Function) 502 and/or statistical and/or analytical information i.e. derived statistical and/or analytical information based on collected data by NWAFs (Network Analytics Functions) 502.

An NWAF is similar to an NWDAF 118, however, an NWAF is not required to maintain collected data.

The DCS 501 provides collected data and/or analytical information on request to one or more network functions 503 (e.g. an NWDAF 118), one or more RANs 504 or an OAM 505 or an UE 102.

The DCS 501 authenticates and authorizes components 503, 504, 505 before letting them access the stored data (like a gateway function).

An NWAF 502 can keep collected data temporarily (e.g. as temporary data) if needed. When an NWAF 502 has obtained (i.e**.** collected) data, e.g. from a data producer such as an NF 503, a component of a RAN 504 or an OAM 505, the NWAF 502 provides the collected data to the DCS 501 along with a data profile e.g. indicating one or more of the following for the collected data:
- Data type e.g. "NF related data or NF Service-related data", "UE related or service data", "App data", "Session or flow data", "slice data", etc.,
- Timestamp, e.g. collection time
- Data validity time e.g. validity of collected data
- Data location and validity, e.g. location of data or an indication that data is valid for specific location or area or NF or UE or slice, etc.,
- Data collected NF e.g. NWAF details (address, location and capability)
- Data producer details e.g. data produced function e.g. AMF, SMF, UPF

Similarly, the NWAF 502 provides the analytic and/or statistical information to the DCS 501 along with a data profile e.g. indicating one or more of the following for the analytic information:
- Analytic type e.g. "NF related analytic or NF Service-related analytic", "UE related or service analytic", "App analytic", "Session or flow analytic", "slice analytic", etc.,
- Timestamp, e.g. analytic determine time
- Analytic validity time e.g. validity of analytic
- Analytic location and validity, e.g. location of analytic validity or an indication that analytic is valid for specific location or area or NF or UE or slice, etc.,
- Analytic for a NF e.g. NWAF details (address, location and capability)

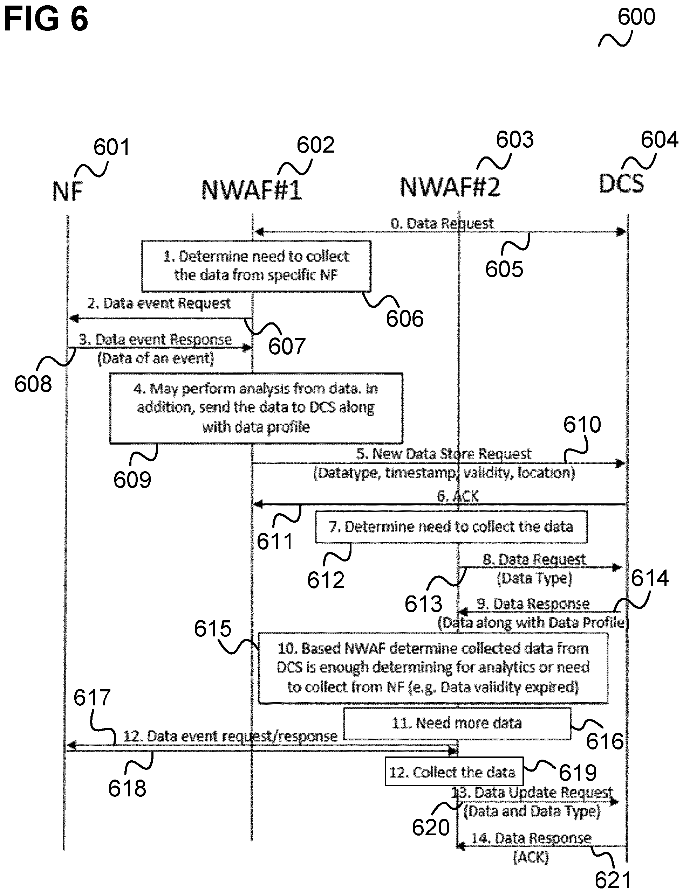

Figure 6 shows a message flow diagram 600 illustrating a method for collecting data.

The message flow takes place between a network function 601, e.g. corresponding to one of the network functions 503 or UE 102, a first NWAF (NWAF#1) 602 and a second NWAF (NWAF#2) 603, e.g. corresponding to two of the NWAFs 502, and a DCS 604, e.g. corresponding to the DCS 501.

In 605, NWAF#1 determines that it needs to collect data, e.g. for a request by a network function NFx for analytics which requires the data from a specific NF 601. Before contacting the NF 601, the NWAF#1 checks with the DCS 604 whether the data is available in the DCS 604.

In this example, it is assumed that the required data is not available in the DCS 604. Therefore, in 606, NWAF#1 determines that is needs to collect the data from the specific NF 601.

In 607 and 608, NWAF#1 gets the required data from the specific NF 601.

In 609, NWAF#1 performs the data analytics.

Additionally, NWAF#1 sends the data collected from NF 601 to the DCS 604 by means of a data store request in 610. In addition, NWAF#1 may also send the analytics information along with collected data.

In addition to the collected data, NWAF#1 also provides a data profile for the collected data e.g. including a data type, a timestamp, a validity, a location (e.g. for which the data is valid or to which it pertains), producer NF 601 details, etc.

Upon reception of the collected data the DCS 604 stores the collected data and may create a future reference ID for the data (e.g. for any future data update). It provides this ID to NWAF#1 with an acknowledgement message in 611.

In 612, NWAF#2 determines that it needs specific data (assumed to be data of the NF 601). Similarly to NWAF#1 in 605 NWAF#2 requests the data (e.g. indicating a data type) from the DCS 604 in 613. The DCS 604 determines which data has been requested (e.g. based on data type). If the requested data is available in the DCS 604 (e.g. if the requested data is included in the data collected by NWAF#1 from the NF 601), the DCS 604 sends the data to NWAF#2 in 614. Before sending the data to the NWAF#2, the DCS 601 may perform an authorization procedure for NWAF#2 (i.e. check access rights to the data of NWAF#2). Depending on the success of the authorization (e.g. based on rights of NWAF#2) the DCS 604 either sends the data to NWAF#2 or rejects the request. If NWAF#2 requests data which is not available in the DCS 604 and DCS 604 thus determines that the data is not available, the DCS 604 sends a "Data not available" notification in response.

In 616, depending on the response by the DCS 604, NWAF#2 either decides to acquire the required data (or at least additional data in case the DCS 604 has provided data which was not sufficient) from the NF 601 or performs analytics.

Assuming, in this example, that NWAF#2 decides to get the data, NWAF triggers data acquisition from the NF 601.

In 617 and 618, NWAF#2 acquires the data from the NF 601 (e.g. by a data event request/response pair).

After the collecting of the acquired data in 619 (e.g. bringing it in a certain form, supplementing it with data profile information), NWAF#2 updates the DCS 604 with the acquired data (e.g. for use by another NWAF). For example, NWAF#2 uses the data reference ID received in 614 for the update in 620. If the DCS 604 did not provide a reference ID in 614, NWAF#2 provides the acquired data as new data set to the DCS 604. The DCS 604 acknowledges the update in 621.

According to an embodiment, it may also be possible that NWAF#2 can communicate directly with NWAF#1 for collecting required data or analytical information.

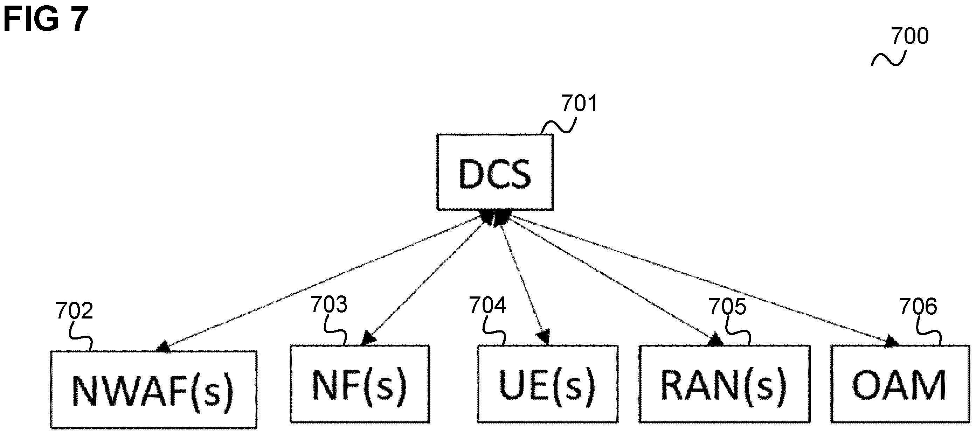

While in the above examples, the DCS 501, 604 serves for storing data for NWAFs for performing analytics, it may, as illustrated in figure 7, act as a central data collection for the whole communication system, **i.e.** for multiple communication network components of various types as well as communication terminals.

Figure 7 shows a communication system arrangement 700 according to an embodiment.

The communication system arrangement 700 includes a DCS 701 which is connected to one or more NWAFs 702 (e.g. similarly to figure 5), one or more network functions 703, one or more UEs 704, one or more radio access networks 705 and an OAM 706.

For example, the DCS 701 stores data from RAN nodes of the RANs 705 (e.g. RANs for both 3GPP and Non-3GPP access), the NFs 703 (e.g. AMF, SMF, UPF, MME, SGW (Serving Gateway), LCS(Location Services), the UEs 704, the NWAFs 702 and the OAM 706 (including system e.g. 3G and 4G). For example, AMF stores the serving UE 704 location information in the DCS 701 or SMF stores information about active and inactive PDU Sessions or RAN stores radio condition information. Any NF 703 or RAN 705 or UE 704 can get the these stored information from DCS. However, DCS only forwards any information based on policy conditions and successful authentication. For example, NWAF 702 can get directly the UE location information from DCS 701 instead of getting from the AMF.

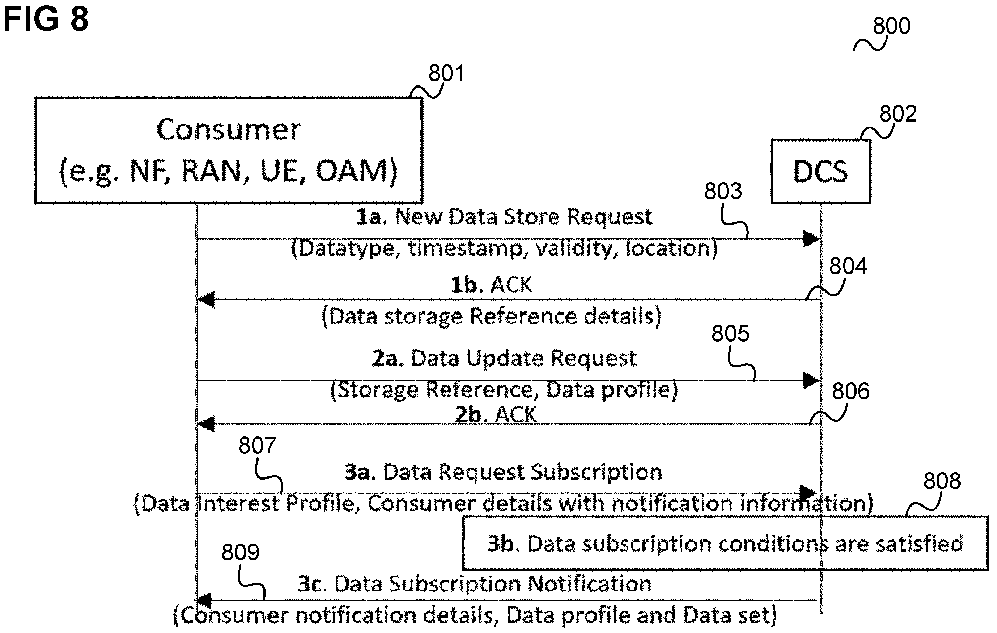

Figure 8 shows a flow diagram 800 illustrating a procedure for data storage and data retrieval by a consumer 801, e.g. corresponding to one of the elements 702 to 706), in/from a DCS 802 (e.g. corresponding to DCS 701).

For storing data, the consumer 801 may, in 803, send a data store request including data to be stored and data profile information (such as a data type, a timestamp, validity or location information) to the DCS 802. The DCS 802 stores the data and acknowledges in 804 providing a data storage reference.

For updating data, the consumer 801 may, in 805, send a data update request including update data for updating data stored in the DCS. The data update request includes a data storage reference to identify the data to be updated. The consumer 801 may further include data profile information into the data update request.

The DCS 802 updates the data and acknowledges in 806.

For data retrieval from the DCS 802 by a consumer 801 requesting data, the DCS 802 may decide based on the result of an authorization and policy conditions i.e. whether to provide (e.g. share or update) data to the requesting consumer 801 or not.

For this, DCS 802 may maintain specific authenticated keys and security mechanism to share the data and may maintain policies and conditions specifying to which elements (e.g. devices or NFs) data may be shared.

An authorized consumer 801 may, in 807, subscribe for a specific data notification (e.g. to a data update, for a specific interest in specific data, etc.) from the DCS 802. Based on subscription conditions, the DCS 802 provides, when it determines in 808 that respective subscription conditions are satisfied, a data notification to each subscribed consumer 801 in 809.

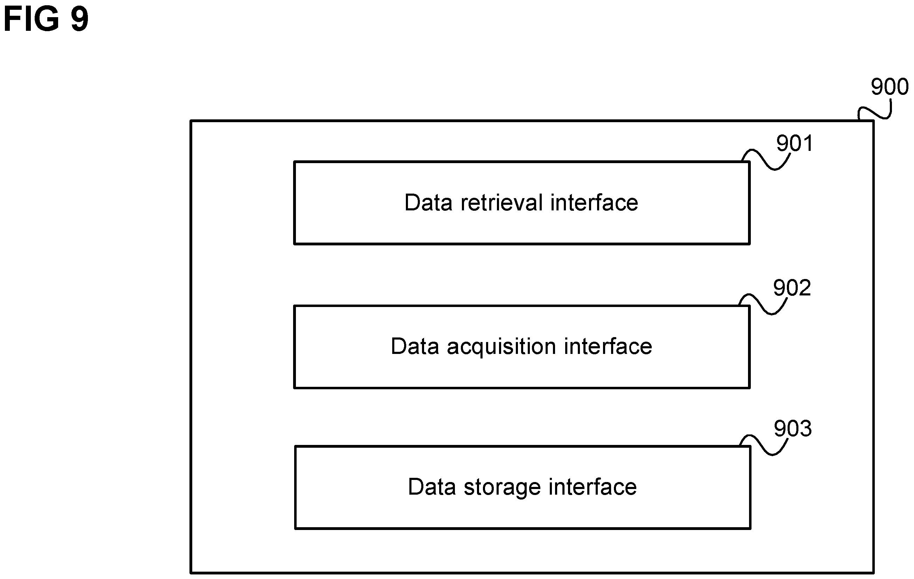

In summary, according to various embodiments, a communication system component of a communication system is provided as illustrated in figure 9.

Figure 9 shows a communication system component 900 of a communication system according to an embodiment.

The communication system component 900 includes a data retrieval interface 901 configured to request data from a data storage component of the communication system.

Further, the communication system component 900 includes a data acquisition interface 902 configured to acquire the data from one or more other components of the communication system if the data is not available for the communication system component in the data storage component.

The communication system component further includes and a data storage interface 903 configured to provide the acquired data to the data storage component for storing the acquired data in the data storage component.

According to various embodiments, in other words, a central storage is provided in a communication system which stores data for components of the communication system. A component of the communication system in need of specific data checks whether it can acquire the data from the central storage and if it cannot have the data from the central storage it gathers the data by other means (e.g. an entity producing the data) and stores the data in the central storage for later use by other components. Thus, it can be achieved that the other components do not need to gather the data themselves but can retrieve it from the central storage. In other words, data is gathered only once. Signalling load in the communication system may thus be reduced.

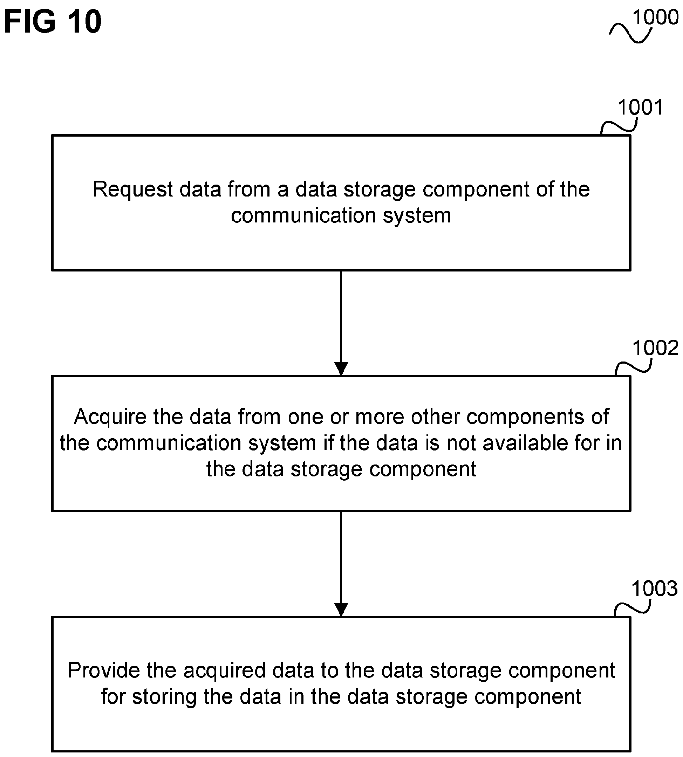

The communication system component 900 for example carries out a method as illustrated in figure 10.

Figure 10 shows a flow diagram 1000 illustrating a method for collecting data in a communication system.

In 1001, a communication system component requests data from a data storage component of the communication system.

In 1002, if the data is not available for the communication system component in the data storage component, the communication system component acquires the data from one or more other components of the communication system.

In 1003, the communication system component providing the acquired data to the data storage component for storing the acquired data in the data storage component.

The components of the communication system component and the data storage component (e.g. in particular the data retrieval interface, the data acquisition interface and the data storage interface) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

## Claims

1. A communication system component of a communication system (100), comprising:
a data retrieval interface configured to request data from a data storage component (701) of the communication system (100);
a data acquisition interface configured to acquire the requested data from one or more other components of the communication system (100) if the requested data is not available for the communication system component in the data storage component (701); and
a data storage interface configured to provide the acquired data to the data storage component (701) for storing the acquired data in the data storage component (701);
wherein the communication system (100) comprises one or more communication terminals (102) and a communication network serving the one or more communication terminals, wherein the communication system component is a component of the communication network;
wherein the communication network comprises a radio access network (103) and a core network (118) and wherein the communication system component is a component of the radio access network or the core network;
wherein the communication system component is further configured to perform an analysis of an operation of the communication system (100) and to provide analysis results to one or more further components of the communication system;
wherein the one or more other components of the communication system (100) comprise one or more core network functions and/or one or more radio access network components; and
wherein the data requested by the data retrieval interface comprises collected data and/or statistical and/or analytical data.

2. The communication system component of claim 1, wherein the data storage component (701) is a component of the communication network.

3. The communication system component of claim 1, wherein the data storage component (701) is a component of the core network.

4. The communication system component of any one of claims 1 to 3, wherein the data not being available for the communication system component in the data storage component (701) comprises the data not being stored in the data storage component (701) and/or the communication system component (701) not having the rights to retrieve the data from the data storage component (701).

5. The communication system component of any one of claims 1 to 4, comprising a memory for storing the acquired data, a data processor configured to process the acquired data and a memory controller configured to delete the acquired data from the memory when the data processor has finished processing of the acquired data and the data storage interface has provided the acquired data to the data storage component (701).

6. The communication system component of claim 5, wherein the data processor is configured to generate a data profile information for the acquired data and the data storage interface is configured to provide the data profile information along with the acquired data to the data storage component (701) for storing the acquired data with the data profile information in the data storage component (701);
wherein the data profile comprises information related to the structure of the data.

7. A system comprising a communication system component according to any one of claims 1 to 6 and a data storage component (701), the data storage component (701) comprising:
a controller configured to decide whether to accept or reject requests for data retrieval, requests for data storage and/or requests for data update by one or more communication system components, wherein any one of the one or more communication system components is configured according to any one of claims 1 to 6, and further configured to initiate data provision to the one or more communication system components, data update in the data storage component (701) and/or data storage for the one or more communication system components depending on the result of the decision;
wherein requests for data storage and/or requests for data update comprise data acquired by a communication system component of the one or more communication system components and/or data analysis results of an operation of the communication system (100) computed by the one or more communication system component;
the data storage component (701) further configured to accept a request for data retrieval, request for data storage and/or request for data update by the communication system component based on a result of an authorization procedure for the communication system component and/or based on a data access policy specifying one or more component types having the right to read data stored in the data storage component (701), having the right to store data in the data storage component (701) and/or having the right to update data stored in the data storage component (701).

8. The system of claim 7 wherein the data storage component (701) is further configured to notify, upon subscription of a communication system component for data, to the communication system component when the data is available for the communication system component in the data storage component (701).

9. A method for collecting data in a communication system (100), the method comprising:
a communication system component requesting data from a data storage component (701) of the communication system (100);
the communication system component acquiring the data from one or more other components of the communication system (100) if the requested data is not available for the communication system component in the data storage component (701);
the communication system component providing the acquired data to the data storage component (701) for storing the acquired data in the data storage component (701);
wherein the communication system (100) comprises one or more communication terminals (102) and a communication network serving the one or more communication terminals and wherein the communication system component is a component of the communication network;
wherein the communication network comprises a radio access network (103) and a core network (118) and wherein the communication system component is a component of the radio access network or the core network;
comprising the communication system component performing an analysis of an operation of the communication system and providing analysis results to one or more further components of the communication system;
wherein the one or more other components of the communication system (100) comprise one or more core network functions and/or one or more radio access network components; and
wherein the data requested by the communication system component from a data storage component (701) comprises collected data and/or statistical and/or analytical data.

10. A computer program and a computer readable medium including instructions, which, when executed by a computer, make the computer perform the method of claim 9.

## Patentansprüche

1. Eine Kommunikationssystemkomponente eines Kommunikationssystems (100), aufweisend:
eine Datenabrufschnittstelle, die eingerichtet ist, Daten von einer Datenspeicherkomponente (701) des Kommunikationssystems (100) anzufordern;
eine Datenerfassungsschnittstelle, die eingerichtet ist, die angeforderten Daten von einer oder mehreren anderen Komponenten des Kommunikationssystems (100) zu erfassen, wenn die angeforderten Daten für die Kommunikationssystemkomponente in der Datenspeicherkomponente (701) nicht verfügbar sind; und
eine Datenspeicherschnittstelle, die eingerichtet ist, die erfassten Daten an die Datenspeicherkomponente (701) zum Speichern der erfassten Daten in der Datenspeicherkomponente (701) bereitzustellen;
wobei das Kommunikationssystem (100) ein oder mehrere Kommunikationsendgeräte (102) und ein Kommunikationsnetzwerk aufweist, das das eine oder die mehreren Kommunikationsendgeräte bedient, wobei die Kommunikationssystemkomponente eine Komponente des Kommunikationsnetzwerks ist;
wobei das Kommunikationsnetzwerk ein Funkzugangsnetzwerk (103) und ein Kernnetzwerk (118) aufweist und wobei die Kommunikationssystemkomponente eine Komponente des Funkzugangsnetzwerks oder des Kernnetzwerks ist;
wobei die Kommunikationssystemkomponente ferner eingerichtet ist, eine Analyse eines Betriebs des Kommunikationssystems (100) durchzuführen und Analyseergebnisse an eine oder mehrere weitere Komponenten des Kommunikationssystems zu liefern;
wobei die eine oder mehreren weiteren Komponenten des Kommunikationssystems (100) eine oder mehrere Kernnetzwerkfunktionen und/oder eine oder mehrere Funkzugangsnetzwerkkomponenten aufweisen; und
wobei die von der Datenabrufschnittstelle angeforderten Daten gesammelte Daten und/oder statistische und/oder analytische Daten aufweisen.

2. Die Kommunikationssystemkomponente nach Anspruch 1, wobei die Datenspeicherkomponente (701) eine Komponente des Kommunikationsnetzwerks ist.

3. Die Kommunikationssystemkomponente nach Anspruch 1, wobei die Datenspeicherkomponente (701) eine Komponente des Kernnetzwerks ist.

4. Die Kommunikationssystemkomponente nach einem der Ansprüche 1 bis 3, wobei die Daten, die für die Kommunikationssystemkomponente in der Datenspeicherkomponente (701) nicht verfügbar sind, die Daten aufweisen, die nicht in der Datenspeicherkomponente (701) gespeichert sind, und/oder die Kommunikationssystemkomponente (701) nicht die Rechte hat, die Daten aus der Datenspeicherkomponente (701) abzurufen.

5. Die Kommunikationssystemkomponente nach einem der Ansprüche 1 bis 4, aufweisend einen Speicher zum Speichern der erfassten Daten, einen Datenprozessor, der eingerichtet ist, die erfassten Daten zu verarbeiten, und eine Speichersteuereinrichtung, die eingerichtet ist, die erfassten Daten aus dem Speicher zu löschen, wenn der Datenprozessor die Verarbeitung der erfassten Daten beendet hat und die Datenspeicherschnittstelle die erfassten Daten an die Datenspeicherkomponente (701) geliefert hat.

6. Die Kommunikationssystemkomponente nach Anspruch 5, wobei der Datenprozessor eingerichtet ist, eine Datenprofilinformation für die erfassten Daten zu erzeugen, und die Datenspeicherschnittstelle eingerichtet ist, die Datenprofilinformation zusammen mit den erfassten Daten der Datenspeicherkomponente (701) bereitzustellen, um die erfassten Daten mit der Datenprofilinformation in der Datenspeicherkomponente (701) zu speichern;
wobei das Datenprofil Informationen aufweist, die sich auf die Struktur der Daten beziehen.

7. Ein System, das eine Kommunikationssystemkomponente gemäß einem der Ansprüche 1 bis 6 und eine Datenspeicherkomponente (701) aufweist, wobei die Datenspeicherkomponente (701) aufweist:
eine Steuereinrichtung, die eingerichtet ist, um zu entscheiden, ob Anforderungen zum Datenabruf, Anforderungen zur Datenspeicherung und/oder Anforderungen zur Datenaktualisierung von einer oder mehreren Kommunikationssystemkomponenten akzeptiert oder abgelehnt werden, wobei eine beliebige der einen oder mehreren Kommunikationssystemkomponenten gemäß einem der Ansprüche 1 bis 6 eingerichtet ist und ferner eingerichtet ist, in Abhängigkeit vom Ergebnis der Entscheidung eine Datenbereitstellung an die eine oder mehreren Kommunikationssystemkomponenten, eine Datenaktualisierung in der Datenspeicherkomponente (701) und/oder eine Datenspeicherung für die eine oder mehreren Kommunikationssystemkomponenten einzuleiten;
wobei Anforderungen zur Datenspeicherung und/oder Anforderungen zur Datenaktualisierung Daten, die durch eine Kommunikationssystemkomponente der einen oder mehreren Kommunikationssystemkomponenten erfasst wurden, und/oder Datenanalyseergebnisse eines Betriebs des Kommunikationssystems (100), die durch die eine oder mehreren Kommunikationssystemkomponenten berechnet wurden, aufweisen;
die Datenspeicherkomponente (701) ferner eingerichtet ist, eine Anforderung zur Datenabfrage, Anforderung zur Datenspeicherung und/oder Anforderung zur Datenaktualisierung durch die Kommunikationssystemkomponente basierend auf einem Ergebnis einer Autorisierungsprozedur für die Kommunikationssystemkomponente und/oder basierend auf einer Datenzugriffsrichtlinie, die einen oder mehrere Komponententypen spezifiziert, die das Recht haben, in der Datenspeicherkomponente (701) gespeicherte Daten zu lesen, das Recht haben, Daten in der Datenspeicherkomponente (701) zu speichern, und/oder das Recht haben, in der Datenspeicherkomponente (701) gespeicherte Daten zu aktualisieren, zu akzeptieren.

8. Das System nach Anspruch 7, wobei die
Datenspeicherkomponente (701) ferner eingerichtet ist, um bei der Anmeldung einer Kommunikationssystemkomponente für Daten die Kommunikationssystemkomponente zu benachrichtigen, wenn die Daten für die Kommunikationssystemkomponente in der Datenspeicherkomponente (701) verfügbar sind.

9. Ein Verfahren zum Sammeln von Daten in einem Kommunikationssystem (100), wobei das Verfahren aufweist:
eine Kommunikationssystemkomponente fordert Daten von einer Datenspeicherkomponente (701) des Kommunikationssystems (100) an;
die Kommunikationssystemkomponente erfasst die Daten von einer oder mehreren anderen Komponenten des Kommunikationssystems (100), falls die angeforderten Daten für die Kommunikationssystemkomponente in der Datenspeicherkomponente (701) nicht verfügbar sind;
die Kommunikationssystemkomponente stellt die erfassten Daten an die Datenspeicherkomponente (701) zum Speichern der erfassten Daten in der Datenspeicherkomponente (701) bereit;
wobei das Kommunikationssystem (100) ein oder mehrere Kommunikationsendgeräte (102) und ein Kommunikationsnetzwerk aufweist, das das eine oder die mehreren Kommunikationsendgeräte bedient, und wobei die Kommunikationssystemkomponente eine Komponente des Kommunikationsnetzwerks ist;
wobei das Kommunikationsnetzwerk ein Funkzugangsnetzwerk (103) und ein Kernnetzwerk (118) aufweist und wobei die Kommunikationssystemkomponente eine Komponente des Funkzugangsnetzwerks oder des Kernnetzwerks ist;
wobei die Kommunikationssystemkomponente eine Analyse eines Betriebs des Kommunikationssystems durchführt und Analyseergebnisse an eine oder mehrere weitere Komponenten des Kommunikationssystems liefert;
wobei die eine oder mehreren anderen Komponenten des Kommunikationssystems (100) eine oder mehrere Kernnetzwerkfunktionen und/oder eine oder mehrere Funkzugangsnetzwerkkomponenten aufweisen; und
wobei die von der Kommunikationssystemkomponente von einer Datenspeicherkomponente (701) angeforderten Daten gesammelte Daten und/oder statistische und/oder analytische Daten aufweisen.

10. Ein Computerprogramm und ein computerlesbares Medium mit Anweisungen, die, wenn sie von einem Computer ausgeführt werden, den Computer veranlassen, das Verfahren nach Anspruch 9 auszuführen.

## Revendications

1. Composant de système de communication d'un système de communication (100), comprenant :
une interface d'extraction de données configurée pour demander des données à un composant de stockage de données (701) du système de communication (100) ;
une interface d'acquisition de données configurée pour acquérir les données demandées à partir d'un ou de plusieurs autres composants du système de communication (100) si les données demandées ne sont pas disponibles pour le composant de système de communication dans le composant de stockage de données (701) ; et
une interface de stockage de données configurée pour fournir les données acquises au composant de stockage de données (701) pour stocker les données acquises dans le composant de stockage de données (701) ;
dans lequel le système de communication (100) comprend un ou plusieurs terminaux de communication (102) et un réseau de communication desservant lesdits un ou plusieurs terminaux de communication, le composant de système de communication étant un composant du réseau de communication ;
dans lequel le réseau de communication comprend un réseau d'accès radio (103) et un réseau central (118) et dans lequel le composant de système de communication est un composant du réseau d'accès radio ou du réseau central ;
dans lequel le composant de système de communication est en outre configuré pour effectuer une analyse d'un fonctionnement du système de communication (100) et pour fournir des résultats d'analyse à un ou plusieurs autres composants du système de communication ;
dans lequel lesdits un ou plusieurs autres composants du système de communication (100) comprennent une ou plusieurs fonctions de réseau central et/ou un ou plusieurs composants de réseau d'accès radio ; et
dans lequel les données demandées par l'interface d'extraction de données comprennent des données collectées et/ou des données statistiques et/ou analytiques.

2. Composant de système de communication selon la revendication 1, dans lequel le composant de stockage de données (701) est un composant du réseau de communication.

3. Composant de système de communication selon la revendication 1, dans lequel le composant de stockage de données (701) est un composant du réseau central.

4. Composant de système de communication selon l'une quelconque des revendications 1 à 3, dans lequel les données n'étant pas disponibles pour le composant de système de communication dans le composant de stockage de données (701) comprennent les données n'étant pas stockées dans le composant de stockage de données (701) et/ou le composant de système de communication (701) n'ayant pas les droits pour extraire les données du composant de stockage de données (701).

5. Composant de système de communication selon l'une quelconque des revendications 1 à 4, comprenant une mémoire pour stocker les données acquises, un processeur de données configuré pour traiter les données acquises et un contrôleur de mémoire configuré pour supprimer les données acquises de la mémoire lorsque le processeur de données a terminé le traitement des données acquises et que l'interface de stockage de données a fourni les données acquises au composant de stockage de données (701).

6. Composant de système de communication selon la revendication 5, dans lequel le processeur de données est configuré pour générer une information de profil de données pour les données acquises et l'interface de stockage de données est configurée pour fournir l'information de profil de données avec les données acquises au composant de stockage de données (701) pour stocker les données acquises avec l'information de profil de données dans le composant de stockage de données (701) ;
dans lequel le profil de données comprend des informations relatives à la structure des données.

7. Système comprenant un composant de système de communication selon l'une quelconque des revendications 1 à 6 et un composant de stockage de données (701), le composant de stockage de données (701) comprenant :
un contrôleur configuré pour décider d'accepter ou de rejeter des demandes d'extraction de données, des demandes de stockage de données et/ou des demandes de mise à jour de données par un ou plusieurs composants de système de communication, dans lequel l'un quelconque des un ou plusieurs composants de système de communication est configuré selon l'une quelconque des revendications 1 à 6, et configuré en outre pour initier la fourniture de données auxdits un ou plusieurs composants de stockage de données (701), la mise à jour de données dans le composant de stockage de données (701) et/ou le stockage de données pour lesdits un ou plusieurs composants de système de communication en fonction du résultat de la décision ;
dans lequel des demandes de stockage de données et/ou des demandes de mise à jour de données comprennent des données acquises par un composant de système de communication desdits un ou plusieurs composants de système de communication et/ou des résultats d'analyse de données d'un fonctionnement du système de communication (100) calculés par lesdits un ou plusieurs composants de système de communication ;
le composant de stockage de données (701) est en outre configuré pour accepter une demande d'extraction de données, une demande de stockage de données et/ou une demande de mise à jour de données par le composant de système de communication sur la base d'un résultat d'une procédure d'autorisation pour le composant de système de communication et/ou sur la base d'une politique d'accès aux données spécifiant un ou plusieurs types de composants ayant le droit de lire des données stockées dans le composant de stockage de données (701), ayant le droit de stocker des données dans le composant de stockage de données (701) et/ou ayant le droit de mettre à jour des données stockées dans le composant de stockage de données (701).

8. Système selon la revendication 7, dans lequel le composant de stockage de données (701) est en outre configuré pour notifier, lors d'une souscription d'un composant de système de communication pour des données, au composant de système de communication lorsque les données sont disponibles pour le composant de système de communication dans le composant de stockage de données (701).

9. Procédé de collecte de données dans un système de communication (100), le procédé comprenant :
un composant de système de communication demandant des données à un composant de stockage de données (701) du système de communication (100) ;
le composant de système de communication acquérant les données à partir d'un ou de plusieurs autres composants du système de communication (100) si les données demandées ne sont pas disponibles pour le composant de système de communication dans le composant de stockage de données (701) ;
le composant de système de communication fournissant les données acquises au composant de stockage de données (701) pour stocker les données acquises dans le composant de stockage de données (701) ;
dans lequel le système de communication (100) comprend un ou plusieurs terminaux de communication (102) et un réseau de communication desservant lesdits un ou plusieurs terminaux de communication et dans lequel le composant de système de communication est un composant du réseau de communication ;
dans lequel le réseau de communication comprend un réseau d'accès radio (103) et un réseau central (118) et dans lequel le composant de système de communication est un composant du réseau d'accès radio ou du réseau central ;
comprenant le composant de système de communication effectuant une analyse d'un fonctionnement du système de communication et fournissant des résultats d'analyse à un ou plusieurs autres composants du système de communication ;
dans lequel lesdits un ou plusieurs autres composants du système de communication (100) comprennent une ou plusieurs fonctions de réseau central et/ou un ou plusieurs composants de réseau d'accès radio ; et
dans lequel les données demandées par le composant de système de communication à un composant de stockage de données (701) comprennent des données collectées et/ou des données statistiques et/ou analytiques.

10. Programme informatique et support lisible par ordinateur comprenant des instructions qui, lorsqu'elles sont exécutées par un ordinateur, font que l'ordinateur exécute le procédé selon la revendication 9.
